(19) Europäisches Patentamt
European Patent Office
Office européen des brevets

(11) EP 4 661 579 A1

(12) EUROPEAN PATENT APPLICATION
published in accordance with Art. 153(4) EPC

(43) Date of publication:
10.12.2025 Bulletin 2025/50

(21) Application number: 24749483.4

(22) Date of filing: 02.01.2024

(51) International Patent Classification (IPC):
H04W 74/08 (2024.01)

(52) Cooperative Patent Classification (CPC):
H04L 5/00; H04W 72/044; H04W 72/54;
H04W 74/08; H04W 74/0833

(86) International application number:
PCT/CN2024/070103

(87) International publication number:
WO 2024/160001 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 03.02.2023 CN 202310118532

(71) Applicant: Datang Mobile Communications
Equipment Co., Ltd.
Beijing 100085 (CN)

(72) Inventors:
• LUO, Yajuan
Beijing 100085 (CN)

• GAO, Qiubin
Beijing 100085 (CN)
• LI, Hui
Beijing 100085 (CN)
• SU, Xin
Beijing 100085 (CN)
• HUANG, Qiuping
Beijing 100085 (CN)
• SONG, Lei
Beijing 100085 (CN)

(74) Representative: Ipsilon
Le Centralis
63, avenue du Général Leclerc
92340 Bourg-la-Reine (FR)

(54) TA ADJUSTMENT METHOD AND APPARATUS, AND STORAGE MEDIUM

(57) Provided in the present disclosure are a TA adjustment method and apparatus, and a storage medium. The method comprises: receiving an adjustment command transmitted by a network device, wherein the adjustment command is used for instructing a terminal to perform TA adjustment on an uplink of a target TRP; determining, on the basis of the adjustment command, a TA adjustment value corresponding to the target TRP; determining a TAT corresponding to the target TRP; and performing TA adjustment on the basis of the TA adjustment value and the TAT.

FIG. 1

**Description**

CROSS-REFERENCES TO RELATED APPLICATIONS

The present application claims priority to Chinese Patent Application No. 202310118532.4 filed on February 03, 2023, entitled "TA Adjustment Method and Apparatus, and Storage Medium", which is hereby incorporated by reference in its entirety.

FIELD

The present application relates to the field of communications, and in particular, to methods and apparatuses for timing advance adjustment and a storage medium.

BACKGROUND

During a random access process, a terminal/user equipment (UE) needs to maintain uplink synchronization with the base station. Since the time of uplink signal transmission may change at any time, the UE needs to adjust the timing advance (TA).

In traditional TA adjustment, the terminal performs TA adjustment within a validity period indicated by a time alignment timer (TAT), which is obtained through a timing advance group (TAG) configured by a network. In case that the terminal performs uplink communication with two transmitting receiving points (TRPs), if the TAT timeout causes uplink asynchronization, there is no prior art for TA adjustment in a scenario of multi-transmitting receiving points (MTRPs). A problem of uplink asynchronization caused by TAT failure during uplink communication between the terminal and multiple TRPs urgently needs to be solved.

BRIEF SUMMARY

Embodiments of the present application provide methods and apparatuses for timing advance (TA) adjustment and a storage medium to solve a problem of uplink asynchronization caused by time alignment timer (TAT) failure in the multi-transmitting receiving points scenario in the prior art.

Embodiments of the present application provide a method for timing advance (TA) adjustment, performed by a terminal, including:

receiving an adjustment command transmitted from a network device, where the adjustment command is used to instruct a terminal to perform TA adjustment on an uplink of a target transmitting receiving point (TRP);

determining a TA adjustment value corresponding to the target TRP based on the adjustment command;

determining a time alignment timer (TAT) corresponding to the target TRP; and

performing TA adjustment based on the TA adjustment value and the TAT.

In some embodiments, in case that each TRP in two TRPs corresponds to a TAT respectively, and failure of the TAT/a timing advance group (TAG) corresponding to the target TRP causes an uplink asynchronization, the method further includes:
initiating a random access process for the target TRP.

In some embodiments, initiating the random access process for the target TRP includes:

determining a preamble corresponding to the target TRP;

determining a target beam for transmitting the preamble; and

transmitting the preamble to the network device based on the target beam.

In some embodiments, the method further includes one or more of the following steps:

flushing a hybrid automatic repeat request (HARQ) buffer corresponding to a failed TAT/TAG;

clearing a hybrid automatic repeat request (HARQ) process corresponding to a failed TAT/TAG;

clearing a physical uplink shared channel (PUSCH) transmission corresponding to a failed TAT/TAG;

clearing a physical uplink control channel (PUCCH) transmission corresponding to a failed TAT/TAG;

clearing a sounding reference signal (SRS) transmission corresponding to a failed TAT/TAG;

releasing a physical uplink control channel (PUCCH) resource corresponding to a failed TAT/TAG;

releasing a sounding reference signal (SRS) resource corresponding to a failed TAT/TAG;

clearing a configured downlink assignment corresponding to a failed TAT/TAG;

clearing a configured uplink grant corresponding to a failed TAT/TAG; or,

clearing a physical uplink shared channel (PUSCH) resource for semi-persistent channel state information (CSI) reporting corresponding to a failed TAT/TAG.

In some embodiments, determining the preamble corresponding to the target TRP includes:

determining a selection range of the preamble based on a synchronization signal block (SSB) or a TAG identifier; and

determining the preamble corresponding to the target TRP based on the selection range.

In some embodiments, determining the selection range of the preamble based on the TAG identifier includes:

determining a TAG identifier corresponding to the target TRP;

determining a preamble group based on the TAG identifier, where the preamble group is associated with the TAG identifier; and

determining the selection range of the preamble, where the selection range of the preamble includes the preamble group.

In some embodiments, the target beam is a receiving beam of a target SSB; and
the target SSB is associated with a target TAG identifier, where the target TAG identifier is a TAG identifier corresponding to the target TRP.
In some embodiments, in case that a preamble is determined for each target TRP, the target beam further includes one or more of the following beams:

a receiving beam of a target reference signal, where the target reference signal is a type D source reference signal included in target transmission configuration indication state information, and the target transmission configuration indication state information is associated with the target TAG identifier; or,

a receiving beam for downlink transmission scheduled by a physical downlink control channel (PDCCH) carried on a target control resource set, where the target control resource set is a control resource set indicated by a target control resource set pool index, and the target control resource set pool index is associated with the target TAG identifier.

In some embodiments, in case that two TRPs correspond to a same TAT, determining the TAT corresponding to the target TRP includes:

determining a time interval for receiving adjustment commands corresponding to two TRPs; and

resetting the TAT corresponding to the target TRP in case that the time interval is less than a given time window length.

In some embodiments, determining the TA adjustment value corresponding to the target TRP based on the adjustment command includes:

parsing a first numerical value and a TAG identifier from the adjustment command, where the TAG identifier is used to indicate the target TRP; and

determining the first numerical value as the TA adjustment value corresponding to the target TRP based on the TAG identifier.

In some embodiments, determining the TA adjustment value corresponding to the target TRP based on the adjustment command includes:

parsing a first numerical value and a CORESETPoolIndex from the adjustment command, where the CORESETPoolIndex is used to indicate the target TRP; and

determining the first numerical value as the TA adjustment value corresponding to the target TRP based on the CORESETPoolIndex.

In some embodiments, determining the TA adjustment value corresponding to the target TRP based on the adjustment command includes:

parsing a first numerical value from the adjustment command, and determining a physical downlink control channel (PDCCH) corresponding to downlink control information (DCI) for scheduling the adjustment command, where the PDCCH is used to indicate the target TRP; and

determining the first numerical value as the TA adjustment value corresponding to the target TRP based on the PDCCH.

Embodiments of the present application provide a method for timing advance (TA) adjustment, performed by a network device, including:
transmitting an adjustment command to a terminal, where the adjustment command is used to instruct a terminal to perform TA adjustment on an uplink of a target transmitting receiving point (TRP).

In some embodiments, in case that each TRP in two TRPs corresponds to a TAT respectively, and failure of the TAT/a timing advance group (TAG) corresponding to the target TRP causes an uplink asynchronization, the method further includes:
receiving a preamble corresponding to the target TRP transmitted from the terminal.

Embodiments of the present application provide a terminal, including a memory, a transceiver, and a processor, where

the memory is used for storing a computer program; the transceiver is used for transmitting and receiving data under control of the processor; and the processor is used for reading the computer program in the memory and performing the following operations:

receiving an adjustment command transmitted from a network device, where the adjustment command is used to instruct a terminal to perform TA adjustment on an uplink of a target transmitting receiving point (TRP);

determining a TA adjustment value corresponding to the target TRP based on the adjustment command;

determining a time alignment timer (TAT) corresponding to the target TRP; and

performing TA adjustment based on the TA adjustment value and the TAT.

In some embodiments, in case that each TRP in two TRPs corresponds to a TAT respectively, and failure of the TAT/a timing advance group (TAG) corresponding to the target TRP causes an uplink asynchronization, the processor is further used for reading the computer program in the memory and perform the following operations:
initiating a random access process for the target TRP.

In some embodiments, initiating the random access process for the target TRP includes:

determining a preamble corresponding to the target TRP;

determining a target beam for transmitting the preamble; and

transmitting the preamble to the network device based on the target beam.

In some embodiments, the processor is further used for reading the computer program in the memory and perform one or more of the following operations:

clearing a hybrid automatic repeat request (HARQ) cache corresponding to a failed TAT/TAG;

clearing a hybrid automatic repeat request (HARQ) process corresponding to a failed TAT/TAG;

clearing a physical uplink shared channel (PUSCH) transmission corresponding to a failed TAT/TAG;

clearing a physical uplink control channel (PUCCH) transmission corresponding to a failed TAT/TAG;

clearing a sounding reference signal (SRS) transmission corresponding to a failed TAT/TAG;

releasing a physical uplink control channel (PUCCH) resource corresponding to a failed TAT/TAG;

releasing a sounding reference signal (SRS) resource corresponding to a failed TAT/TAG;

clearing a configured downlink assignment corresponding to a failed TAT/TAG;

clearing a configured uplink grant corresponding to a failed TAT/TAG; or,

clearing a physical uplink shared channel (PUSCH) resource for semi-persistent channel state information (CSI) reporting corresponding to a failed TAT/TAG.

In some embodiments, determining the preamble corresponding to the target TRP includes:

determining a selection range of the preamble based on a synchronization signal block (SSB) or a TAG identifier; and

determining the preamble corresponding to the target TRP based on the selection range.

In some embodiments, determining the selection range of the preamble based on the TAG identifier includes:

determining a TAG identifier corresponding to the target TRP;

determining a preamble group based on the TAG identifier, where the preamble group is associated with the TAG identifier; and

determining the selection range of the preamble, where the selection range of the preamble includes the preamble group.

In some embodiments, the target beam is a receiving beam of a target SSB; and
the target SSB is associated with a target TAG identifier, where the target TAG identifier is a TAG identifier corresponding to the target TRP.
In some embodiments, in case that a preamble is determined for each target TRP, the target beam further includes one or more of the following beams:

a receiving beam of a target reference signal, where the target reference signal is a type D source reference signal included in target transmission configuration indication state information, and the target transmission configuration indication state information is associated with the target TAG identifier; or,

a receiving beam for downlink transmission scheduled by a physical downlink control channel (PDCCH) carried on a target control resource set, where the target control resource set is a control resource set indicated by a target control resource set pool index, and the target control resource set pool index is associated with the target TAG identifier.

In some embodiments, in case that two TRPs correspond to a same TAT, determining the TAT corresponding to the target TRP includes:

determining a time interval for receiving adjustment commands corresponding to two TRPs; and

resetting the TAT corresponding to the target TRP in case that the time interval is less than a given time window length.

In some embodiments, determining the TA adjustment value corresponding to the target TRP based on the adjustment command includes:

parsing a first numerical value and a TAG identifier from the adjustment command, where the TAG identifier is used to indicate the target TRP; and

determining the first numerical value as the TA adjustment value corresponding to the target TRP based on the TAG identifier.

In some embodiments, determining the TA adjustment value corresponding to the target TRP based on the adjustment command includes:

parsing a first numerical value and a CORESETPoolIndex from the adjustment command, where the CORESETPoolIndex is used to indicate the target TRP; and

determining the first numerical value as the TA adjustment value corresponding to the target TRP based on the CORESETPoolIndex.

In some embodiments, determining the TA adjustment value corresponding to the target TRP based on the adjustment command includes:

parsing a first numerical value from the adjustment command, and determining a physical downlink control channel (PDCCH) corresponding to downlink control information (DCI) for scheduling the adjustment command, where the PDCCH is used to indicate the target TRP; and

determining the first numerical value as the TA adjustment value corresponding to the target TRP based on the PDCCH.

Embodiments of the present application provide a network device, including a memory, a transceiver, and a processor, where
the memory is used for storing a computer program; the transceiver is used for transmitting and receiving data under control of the processor; and the processor is used for reading the computer program in the memory and performing the following operations:
transmitting an adjustment command to a terminal, where the adjustment command is used to instruct a terminal to perform TA adjustment on an uplink of a target transmitting receiving point (TRP).

In some embodiments, in case that each TRP in two TRPs corresponds to a TAT respectively, and failure of the TAT/a timing advance group (TAG) corresponding to the target TRP causes an uplink asynchronization, the processor is further used for reading the computer program in the memory and perform the following operations:
receiving a preamble corresponding to the target TRP transmitted from the terminal.

Embodiments of the present application provide an apparatus for timing advance (TA) adjustment, including:

a first receiving module, used for receiving an adjustment command transmitted from a network device, where the adjustment command is used to instruct a terminal to perform TA adjustment on an uplink of a target transmitting receiving point (TRP);

a first determining module, used for determining a TA adjustment value corresponding to the target TRP based on the adjustment command;

a second determining module, used for determining a time alignment timer (TAT) corresponding to the target TRP; and

an adjusting module, used for performing TA adjustment based on the TA adjustment value and the TAT.

In some embodiments, the apparatus further includes an initiating module;
the initiating module is used for initiating a random access process for the target TRP.

In some embodiments, the initiating module includes:

a first determining submodule, used for determining a preamble corresponding to the target TRP;

a second determining submodule, used for determining a target beam for transmitting the preamble; and

a transmitting submodule, used for transmitting the preamble to the network device based on the target beam.

In some embodiments, the initiating module further includes:

a first clearing submodule, used for clearing a hybrid automatic repeat request (HARQ) cache corresponding to a failed TAT/TAG;

a second clearing submodule, used for clearing a hybrid automatic repeat request (HARQ) process corresponding to a failed TAT/TAG;

a third clearing submodule, used for clearing a physical uplink shared channel (PUSCH) transmission corresponding to a failed TAT/TAG;

a fourth clearing submodule, used for clearing a physical uplink control channel (PUCCH) transmission corresponding to a failed TAT/TAG;

a fifth clearing submodule, used for clearing a sounding reference signal (SRS) transmission corresponding to a failed TAT/TAG;

a first releasing submodule, used for releasing a physical uplink control channel (PUCCH) resource corresponding to a failed TAT/TAG;

a second releasing submodule, used for releasing a sounding reference signal (SRS) resource corresponding to a failed TAT/TAG;

a sixth clearing submodule, used for clearing a configured downlink assignment corresponding to a failed TAT/TAG;

a seventh clearing submodule, used for clearing a configured uplink grant corresponding to a failed TAT/TAG; or,

an eighth clearing submodule, used for clearing a physical uplink shared channel (PUSCH) resource for semi-persistent channel state information (CSI) reporting corresponding to a failed TAT/TAG.

In some embodiments, the first determining submodule includes:

a first determining unit, used for determining a selection range of the preamble based on a synchronization signal block (SSB) or a TAG identifier; and

a second determining unit, used for determining the preamble corresponding to the target TRP based on the selection range.

In some embodiments, the first determining unit includes:

a first determining subunit, used for determining a TAG identifier corresponding to the target TRP;

a second determining subunit, used for determining a preamble group based on the TAG identifier, where the preamble group is associated with the TAG identifier; and

a third determining subunit, used for determining the selection range of the preamble, where the selection range of the preamble includes the preamble group.

In some embodiments, the target beam is a receiving beam of a target SSB; and
the target SSB is associated with a target TAG identifier, where the target TAG identifier is a TAG identifier corresponding to the target TRP.

In some embodiments, in case that a preamble is determined for each target TRP, the target beam further includes one or more of the following beams:

a receiving beam of a target reference signal, where the target reference signal is a type D source reference signal included in target transmission configuration indication state information, and the target transmission configuration indication state information is associated with the target TAG identifier; or,

a receiving beam for downlink transmission scheduled by a physical downlink control channel (PDCCH) carried on a target control resource set, where the target control resource set is a control resource set indicated by a target control resource set pool index, and the target control resource set pool index is associated with the target TAG identifier.

In some embodiments, the second determining module includes:

a third determining submodule, used for determining a time interval for receiving adjustment commands corresponding to two TRPs; and

a receiving submodule, used for resetting the TAT corresponding to the target TRP in case that the time interval is less than a given time window length.

In some embodiments, the first determining module includes:

a first parsing submodule, used for parsing a first numerical value and a TAG identifier from the adjustment command, where the TAG identifier is used to indicate the target TRP; and

a fourth determining submodule, used for determining the first numerical value as the TA adjustment value corresponding to the target TRP based on the TAG identifier.

In some embodiments, the first determining module further includes:

a second parsing submodule, used for parsing a first numerical value and a CORESETPoolIndex from the adjustment command, where the CORESETPoolIndex is used to indicate the target TRP; and

a fifth determining submodule, used for determining the first numerical value as the TA adjustment value corresponding to the target TRP based on the CORESETPoolIndex.

In some embodiments, the first determining module further includes:

a third parsing submodule, used for parsing a first numerical value from the adjustment command, and determining a physical downlink control channel (PDCCH) corresponding to downlink control information (DCI) for scheduling the adjustment command, where the PDCCH is used to indicate the target TRP; and

a sixth determining submodule, used for determining the first numerical value as the TA adjustment value corresponding to the target TRP based on the PDCCH.

Embodiments of the present application provide an apparatus for timing advance (TA) adjustment, including: a first transmitting module, used for transmitting an adjustment command to a terminal, where the adjustment command is used to instruct a terminal to perform TA adjustment on an uplink of a target transmitting receiving point (TRP).

In some embodiments, the apparatus further includes a second receiving module; the second receiving module is used for receiving a preamble corresponding to the target TRP transmitted from the terminal.

Embodiments of the present application further provide a processor-readable storage medium storing a computer program, where the computer program is used to cause a processor to perform any of the methods for timing advance adjustment described above.

Embodiments of the present application further provide a computer-readable storage medium storing a computer program, where the computer program is used to cause a computer to perform any of the methods for timing advance adjustment described above.

Embodiments of the present application further provide a communication device-readable storage medium storing a computer program, where the computer program is used to cause a communication device to perform any of the methods for timing advance adjustment described above.

Embodiments of the present application further provide a chip product-readable storage medium storing a computer program, where the computer program is used to cause a chip product to perform any of the methods for timing advance adjustment described above.

In the methods and apparatuses for timing advance adjustment and the storage medium provided in the embodiments of the present application, the terminal determines the TA adjustment value corresponding to the TRP based on the adjustment command transmitted from the network device, and determines the TAT corresponding to the TRP. The terminal may adjust the TA using the obtained TA adjustment value within the validity period indicated by the TAT corresponding to the TRP, adjusting TA in a scenario of multi-transmitting receiving points (MTRPs), and solving a problem of uplink asynchronization caused by TAT failure in MTRP scenarios.

BRIEF DESCRIPTION OF THE DRAWINGS

To illustrate solutions in the embodiments of the present application more clearly, the drawings need to be used in the descriptions of the embodiments are briefly described below. The drawings in the following description are some embodiments of the present application, and other drawings may be obtained based on these drawings without any creative work for those skilled in the art.

FIG. 1 is a first schematic diagram of a method for TA adjustment according to an embodiment of the present application;

FIG. 2 is a second schematic diagram of a method for TA adjustment according to an embodiment of the present application;

FIG. 3 is a schematic structural diagram of a terminal according to an embodiment of the present application;

FIG. 4 is a schematic structural diagram of a network device according to an embodiment of the present application;

FIG. 5 is a first schematic structural diagram of an apparatus for TA adjustment according to an embodiment of the present application; and

FIG. 6 is a second schematic structural diagram of an apparatus for TA adjustment according to an embodiment of the present application.

DETAILED DESCRIPTION

In traditional timing advance (TA) adjustment, in case that time alignment timer (TAT) timeout causes uplink asynchronization, if uplink data reaches at this time, the terminal will initiate a contention-based random access (CBRA) process; if there is downlink data to be transmitted from the base station to the terminal at this time, the base station will initiate a contention-free random access (CFRA) process, such as access initiated by transmitting a physical downlink control channel (PDCCH) command. The terminal determines a TA adjustment value based on a random access response (RAR) message feedback from the network device, and performs TA adjustment within a validity period indicated by the TAT.

In Rel-18 of the 3rd Generation Partnership Project (3GPP), the terminal communicates uplink with two transmitting receiving points (TRPs) and uses a TA adjustment value for each TRP's uplink transmission. However, there is no consensus on whether different TRPs use the same TAT or two independent TATs during adjustment. If two independent TATs are used, and a TAT corresponding to one of the TRPs fails, causing uplink asynchronization, or TATs corresponding to both TRPs fail, causing uplink asynchronization, how to initiate CBRA for TA adjustment of the TRP terminal corresponding to the failed TAT when there is uplink data reached is a problem.

In addition, the terminal communicates uplink with two TRPs. In obtaining the initial TA value, the base station receives the preamble transmitted from the terminal and estimates the TA value. The TA value is indicated to the terminal through the RAR message, but the terminal cannot determine the TAT in which TAG should be used for the obtained TA value, and therefore cannot calculate the latest TA adjustment value corresponding to the TAG during subsequent closed-loop updates.

Based on the above problems, the embodiments of the present application propose a method for TA adjustment, in which the terminal determines the TA adjustment value corresponding to the TRP based on the adjustment command transmitted from the network device, and determines the TAT corresponding to the TRP. The terminal may adjust the TA using the obtained TA adjustment value within the validity period indicated by the TAT corresponding to the TRP, adjusting TA in a scenario of multi-transmitting receiving points (MTRPs), and solving a problem of uplink asynchronization caused by TAT failure in MTRP scenarios.

To clarify the objectives, solutions, and advantages of the embodiments of the present application, a clear and complete description of the solutions in the embodiments of the present application is provided below in conjunction with the accompanying drawings. These embodiments are only a part of the embodiments of the present application, and not all of the embodiments. All other embodiments obtained by those skilled in the art based on the embodiments of the present application without any creative work belong to the scope of the present application.

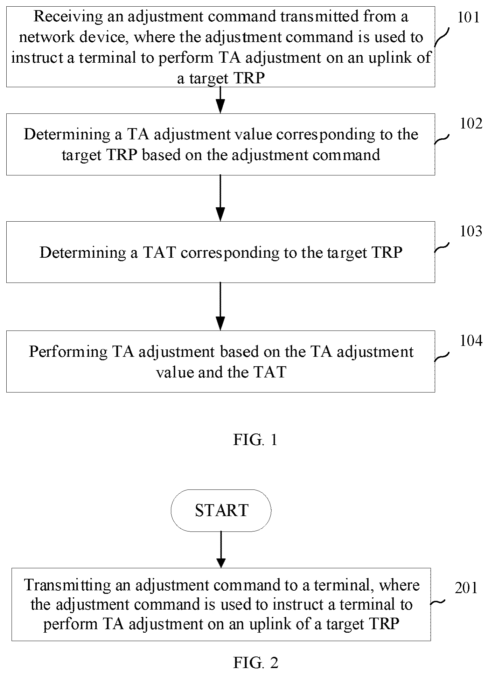

FIG. 1 is a first schematic diagram of a method for TA adjustment according to an embodiment of the present application. As shown in FIG. 1, embodiments of the present application provide a method for TA adjustment, which may be performed by a terminal, such as a mobile phone, etc. The method includes:

Step 101: receiving an adjustment command transmitted from a network device, where the adjustment command is used to instruct the terminal to perform TA adjustment on an uplink of a target transmitting receiving point (TRP);

In an embodiment, the adjustment command may be a timing advance command (TAC), which is issued to the terminal through a media access control-control element (MAC CE). The initial adjustment command may be carried and issued by a random access response (RAR) message, which is transmitted through a media access control protocol data unit (MAC PDU). The network device instructs the terminal to perform TA adjustment on the uplink of the target TRP through the adjustment command, and the target TRP is a TRP corresponds to the uplink that requires TA adjustment.

It should be noted that TRP in the embodiments of the present application may be a general term for a type of device, and the name of this type of device is not limited to "TRP". Other devices with the same function are also within the scope of protection of the present application. This type of device may also be represented by control resource set pool index identifier (CORESETPoolIndex ID), transmission configuration indication state identifier (TCI state ID), or synchronization signal block group identifier (SSB group ID).

The network device transmits an adjustment command to the terminal, which is used to instruct the terminal to perform TA adjustment on the uplink of the target TRP. The terminal receives the adjustment command transmitted from the network device and learns to adjust the TA based on the value in the adjustment command.

Step 102: determining a TA adjustment value corresponding to the target TRP based on the adjustment command.

In an embodiment, after receiving the adjustment command transmitted from the network device, the terminal parses the adjustment command and determines the TA adjustment value corresponding to the target TRP.

For example, when the terminal is initially connected, it obtains an initial value by parsing the adjustment command transmitted from the network device, and determines the TAG corresponding to the initial value in the adjustment command based on the adjustment command. The TAG is configured by the network device for the terminal and corresponds to each TRP. The terminal may determine the TRP corresponding to the initial value in the adjustment command, that is, the target TRP, and thus determine the TA adjustment value corresponding to the target TRP, that is, the initial value.

For example, after accessing the network, the terminal needs to update the TA to maintain uplink synchronization. In case of receiving a new adjustment command from the network device, the TA value corresponding to the target TRP may be obtained based on the adjustment command. The terminal calculates the TA adjustment value corresponding to the target TRP based on this TA value combined with the TA adjustment value corresponding to the previous target TRP.

Step 103: determining a time alignment timer (TAT) corresponding to the target TRP.

In an embodiment, the terminal communicates uplink with two TRPs, which may use the same TAT for TA adjustment or each TRP may correspond to an independent TAT, and the TAT is in the TAG and configured by the network device for the terminal. After determining the TA adjustment value corresponding to the target TRP, the terminal needs to determine the TAT used for the TA adjustment value, that is, the TAT corresponding to the target TRP.

Step 104: performing TA adjustment based on the TA adjustment value and the TAT.

In an embodiment, after determining the TA adjustment value and TAT corresponding to the target TRP, the terminal adjusts the TA using the TA adjustment value before the expiration of the validity period indicated by the TAT.

In the method for TA adjustment provided in the embodiments of the present application, the TA adjustment value corresponding to the target TRP is determined based on the adjustment command transmitted from the network device, and the TA is adjusted based on the TA adjustment value within the validity period indicated by the TAT corresponding to the target TRP. The UE may adjust the TA when the TAT fails and causes uplink asynchronization in the scenario of MTRP, maintaining uplink synchronization in the MTRP scenario.

In some embodiments, in case that each TRP in two TRPs corresponds to a TAT respectively, and failure of the TAT/a timing advance group (TAG) corresponding to the target TRP causes an uplink asynchronization, the method further includes:

initiating a random access process for the target TRP.

In an embodiment, the UE performs uplink communication with two TRPs and uses two independent TATs for the TA adjustment values corresponding to the two TRPs, that is, each TRP in the two TRPs corresponds to a TAT.

In case that the TAT or TAG corresponding to one of the two TRPs fails, causing uplink asynchronization, and there is uplink data reached that needs to be transmitted, it is necessary to obtain the TA adjustment value corresponding to this TRP again. The terminal first initiates a random access process for this TRP.

For example, UE performs uplink transmission with TRP1 and TRP2. The base station configures TAG1 and TAG2 for UE in the same cell, corresponding to TRP1 and TRP2 respectively. TAG1 carries TAT1, and TAG2 carries TAT2. In case that TAT1/TAG1 corresponding to TRP1 fails and causes uplink asynchronization, and there is uplink data reaching at this time, the UE initiates a random access process for TRP1 to obtain the TA adjustment value corresponding to TRP1.

In case that TAT or TAG corresponding to two TRPs fails and causes uplink asynchronization, and there is uplink data reaching and needs to be transmitted at this time, the UE may initiate a random access process for one TRP first, or simultaneously initiate a random access process for both TRPs.

For example, UE performs uplink transmission with TRP1 and TRP2. The base station configures TAG1 and TAG2 for UE in the same cell, corresponding to TRP1 and TRP2 respectively. TAG1 carries TAT1, and TAG2 carries TAT2. In case that the TAT1/TAG1 corresponding to TRP1 and the TAT2/TAG2 corresponding to TRP2 fail and cause uplink asynchronization, and there is uplink data reaching at this time, the UE first initiates a random access process for TRP1, establishes uplink synchronization with TRP1 and adjusts the TA value, and then initiates a random access process and establishes uplink synchronization with TRP2.

For example, UE performs uplink transmission with TRP1 and TRP2. The base station configures TAG1 and TAG2 for UE in the same cell, corresponding to TRP1 and TRP2 respectively. TAG1 carries TAT1, and TAG2 carries TAT2. In case that the TAT1/TAG1 corresponding to TRP1 and the TAT2/TAG2 corresponding to TRP2 fail and cause uplink asynchronization, and there is uplink data reaching at this time, the UE simultaneously initiates a random access process to TRP1 and TRP2, establishing uplink synchronization with TRP1 and TRP2 respectively.

In the method for TA adjustment provided in the embodiments of the present application, two independent TATs are used, each corresponding to a TRP, in the scenario of uplink communication between a UE and two TRPs. In case that one or both of the two TRPs' TAT/TAGs fail and cause uplink synchronization, the UE initiates a random access process for the failed one or two TRPs, establishing uplink synchronization between the UE and the failed TRP, which achieves TA adjustment and uplink synchronization in the MTRP scenario, reduces the impact of the failure of the TAT corresponding to one TRP on the uplink transmission of another link.

In some embodiments, initiating the random access process for the target TRP includes:

determining a preamble corresponding to the target TRP;

determining a target beam for transmitting the preamble; and

transmitting the preamble to the network device based on the target beam.

In an embodiment, in case of initiating a random access process for a TRP with TAT/TAG failure, i.e., the target TRP, the first step is to determine the preamble corresponding to the target TRP, such as randomly selecting a preamble for the target TRP terminal.

Then the UE determines a target beam for transmitting the preamble to ensure that the target beam for transmitting the preamble is directed towards the target TRP. The target beam is a transmitting beam for the UE to transmit the preamble to the target TRP. For example, the UE uses a downlink receiving beam corresponding to the target TRP to transmit the preamble corresponding to the target TRP. The downlink receiving beam corresponding to the target TRP may be determined by an association between the uplink and downlink.

A time-frequency resource for transmitting the preamble corresponding to the target TRP may be determined by reading a system information block 1 (SIB1) message and querying the physical random access channel (PRACH) frequency domain resource configuration table. For example, the terminal reads the SIB1 message to obtain a time-domain resource index of the PRACH, and then searches Table 6.3.3.2-2 in 3GPP TS 38.211 based on the time-domain resource index to obtain the frequency-domain resource of the PRACH.

power for transmitting the preamble corresponding to the target TRP is calculated using the following formula:

$$P_{PRACH} = \min\{P_{CMAX}, P_{PRACH,target} + PL\},$$

where $P_{PRACH}$ represents a power value for transmitting the preamble on the PRACH, measured in dBm; $P_{CMAX}$ is a configured maximum transmitting power of UE, measured in dBm; $P_{PRACH,target}$ is an expected received power for the preamble configured by the network device, which is configured to the UE through a radio resource control (RRC) configuration, i.e., a preambleReceivedTargetPower signaling; and $PL$ is a path loss value measured by the UE, measured in dB, which is determined by transmitting an associated SSB with the PRACH, i.e., calculated using the following formula:

$$PL = referenceSignalPower - higher\_layer\_filtered\_RSRP,$$

where *referenceSignalPower* represents transmitting power of the SSB, which is indicated to the terminal through an SSB power signaling (ss-PBCH-BlockPower signaling); and *higher_layer_filtered_RSRP* represents upper layer filtering reference signal receiving power (RSRP).

After determining the preamble corresponding to the target TRP and the target beam and power for transmitting the preamble, the UE transmits the preamble corresponding to the target TRP to the network device based on the target beam with the determined power. After receiving the preamble corresponding to the target TRP, the network device feeds back an adjustment command to the terminal, which is carried by the RAR MAC CE. The terminal adjusts the TA based on the adjustment command.

In the method for TA adjustment provided in the embodiments of the present application, by determining the preamble corresponding to the target TRP, and determining the beam, the time-frequency resource, and the transmitting power for transmitting the preamble, the UE may transmit the preamble to the target TRP, ensuring accurate and smooth uplink transmission of the preamble and achieving the random access process for the target TRP, which ensures the accuracy of TA estimation for the uplink corresponding to the target TRP and improves the accuracy of uplink synchronization.

In some embodiments, the method further includes one or more of the following steps:

clearing a hybrid automatic repeat request (HARQ) cache corresponding to a failed TAT/TAG;

clearing a hybrid automatic repeat request (HARQ) process corresponding to a failed TAT/TAG;

clearing a physical uplink shared channel (PUSCH) transmission corresponding to a failed TAT/TAG;

clearing a physical uplink control channel (PUCCH) transmission corresponding to a failed TAT/TAG;

clearing a sounding reference signal (SRS) transmission corresponding to a failed TAT/TAG;

releasing a physical uplink control channel (PUCCH) resource corresponding to a failed TAT/TAG;

releasing a sounding reference signal (SRS) resource corresponding to a failed TAT/TAG;

clearing a configured downlink assignment corresponding to a failed TAT/TAG;

clearing a configured uplink grant corresponding to a failed TAT/TAG; or,

clearing a physical uplink shared channel (PUSCH) resource for semi-persistent channel state information (CSI) reporting corresponding to a failed TAT/TAG.

In an embodiment, in case that the UE performs uplink communication with two TRPs, if each TRP in two TRPs corresponds to a TAT, and multi downlink control information (multi-DCI) is transmitted based on MTRP, and the TAT/TAG corresponding to the target TRP fails and causes uplink asynchronization, and when the two TRPs correspond to the respective HARQ entity, the UE clears the HARQ cache corresponding to the failed TAT/TAG.

In case that two TRPs correspond to one HARQ entity, the UE clears the HARQ process corresponding to the failed TAT/TAG. For example, every time a HARQ process is scheduled, the physical layer calculates the relationship between each HARQ process and TAG/TRP. In case that a TAT fails, the MAC layer requests the physical layer to report the statistical result and clear the HARQ process corresponding to the failed TAG/TAG/TRP.

In case that each TRP in the two TRPs corresponds to a TAT, and the failure of the TAT/TAG corresponding to the target TRP causes uplink asynchronization, the UE clears the PUSCH, PUCCH, or SRS transmission corresponding to the failed TAT/TAG. UE determines the PUSCH/PUSCH/SRS transmission corresponding to the failed TAT/TAG through the correspondence between TAG and PUSCH/PUSCH/SRS. The correspondence between TAG and PUSCH/PUSCH/SRS may be implemented in one or more of the following ways.

Way 1: associating TAG with a TCI state of PUSCH/PUCCH, or with the spatial relation information of PUSCH/PUCCH.

Way 2: associating TAG with a CORESETPoolIndex corresponding to a CORESET dynamically scheduling PUSCH/PUCCH/SRS. For an uplink channel/uplink signal of a primary cell (PCell) or a special cell (SpCell), the TAG ID may be associated with the uplink channel/uplink signal through RRC configuration, or the CORESETPoolIndex may be associated with the uplink channel/uplink signal.

Way 3: associating TAG with an SSB group where a path loss reference signal (PL RS) for uplink PUSCH/-PUCCH/SRS transmission is located. If the PL RS is an SSB, the terminal will use the TAG corresponding to the SSB group where this SSB is located for the corresponding uplink transmission. If the PL RS is a CSI reference signal (CSI-RS), the terminal uses the TAG corresponding to the SSB group where the quasi common address (QCL) source SSB of this CSI-RS is located for the corresponding uplink transmission.

The UE also clears the configured downlink assignment, the configured uplink grant and the PUSCH resource for semi-persistent CSI reporting corresponding to the failed TAT/TAG. The UE also releases the PUCCH resource or the SRS resource corresponding to the failed TAT/TAG.

The following provides further explanation of the TA maintenance in the method for TA adjustment provided in the above embodiments through specific examples.

Example I

UE performs uplink transmission with two TRPs (TRP1 and TRP2), and a base station configures TAG1 and TAG2 for terminals in a same serving cell, where TAG1 and TAG2 correspond to a same component carrier (CC) of the serving cell as CC1, and TAG1 is used for UE to adjust TA for TRP1, and TAG2 is used for UE to adjust TA for TRP2. TAG1 includes TAT1, and TAG2 includes TAT2. Values of TAT1 and TAT2 are 1280 ms and infinity, respectively.

In an nth slot, the base station issues an uplink (UL) grant scheduling PUSCH, instructing the terminal to perform PUSCH transmission in an (n+k)th slot, and using a sounding reference information (SRI) field to indicate that a beam used by the terminal to transmit PUSCH is the same as a beam used by SRS resource 1. A corresponding TAG ID is configured in the spatial relation information of PUSCH.

The terminal performs PUSCH transmission in the (n+k)th slot according to the instruction of the base station. In an (n+k+3) slot, TAT1 fails, and the terminal flushes HARQ buffer 1 corresponding to TAT1. The terminal determines the PUSCH transmission corresponding to TAG1 by the configured TAG ID in the spatial relation information and clears the PUSCH transmission corresponding to TAG1. Finally, the terminal releases the SRS resource and PUCCH resource corresponding to TAT1.

In the method for TA adjustment provided in the embodiments of the present application, the HARQ buffer, HARQ process, PUCCH transmission, PUSCH transmission, SRS transmission, configured downlink assignment, configured uplink grant, and/or PUSCH resource used for semi-persistent CSI reporting corresponding to the failed TAT/TAG is cleared in case that the TAT/TAG corresponding to the target TRP fails, and the SRS resource and PUCCH resource corresponding to the failed TAT/TAG are released. The available resources are still available, avoiding the waste of transmission resources.

In some embodiments, determining the preamble corresponding to the target TRP includes:

determining a selection range of the preamble based on a synchronization signal block (SSB) or a TAG identifier; and

determining the preamble corresponding to the target TRP based on the selection range.

In an embodiment, the determination of the preamble corresponding to the target TRP is divided into two steps. First, a selection range of the preamble is determined, and then the preamble corresponding to the target TRP is selected within this range.

The UE may determine the selection range of the preamble in two ways. One way is that the network device configures a quantity of available preambles and association between SSB and preambles. The terminal determines the SSB associated with the target TRP based on the PRACH corresponding to the target TRP, and then determines the selection range of preambles based on the association between the SSB and a starting index of multiple consecutive P-codes of the PRACH used for contention.

For example, for SSB index n, where $0<n<3$, the SSB index n is associated with the starting index of the consecutive M P-codes of the PRACH used for contention, where M is a positive integer. If the base station is configured with 64 preambles for CBRA, the starting index of the consecutive 12 preambles corresponding to SSB index n is $(n*64)/4$. The terminal determines the selection range of the preamble based on the SSB index n, which is 12 consecutive preambles with a starting index of $(n * 64)/4$. Then, the terminal randomly selects one preamble from these 12 preambles for uplink transmission.

By associating the SSB index with the starting index of multiple consecutive P-codes, the terminal may accurately lock a given number of preambles when initiating an access process for TRP with TAT failure, quickly determine an available preamble for uplink transmission within this range, which improves the speed and accuracy of preamble selection.

In some embodiments, determining the selection range of the preamble based on the TAG identifier includes:

determining a TAG identifier corresponding to the target TRP;

determining a preamble group based on the TAG identifier, where the preamble group is associated with the TAG identifier; and

determining the selection range of the preamble, where the selection range of the preamble includes the preamble group.

The terminal may also determine the selection range of the preamble through TAG identifier. The network device pre-group preambles, with each TAG ID corresponding to a group of preambles. In case that a TAT of a TAG ID fails, a preamble is selected from the preamble group corresponding to the TAG ID and transmitted.

For example, the UE performs uplink communication with TRP1 and TRP2, where TRP1 corresponds to TAG1/TAT1, and TRP2 corresponds to TAG2/TAT2. The network device groups preambles, including Group1 and Group2, where Group1 is {preamble1, preamble3, preamble5} and Group2 is {preamble2, preamble4, preamble6}, and associates Group1 with TAG1 and Group2 with TAG2. If TAT1 fails, the UE initiates CBRA for TRP1 and determines the TAG1 corresponding to TRP1. Based on the association between Group1 and TAG1, the selection range of preamble is determined as Group1 {preamble 1, preamble 3, preamble 5}, and then the UE randomly selects preamble 1 therefrom for uplink transmission.

By grouping the preamble and associating the TAG identifier with the preamble group, the UE may directly determine the available preamble group based on the TAG identifier corresponding to the target TRP, and select one of the preambles in the preamble group for uplink transmission to TRP1, ensuring the availability of the preamble and improving the speed and accuracy of preamble selection.

In some embodiments, the target beam is a receiving beam of a target SSB; and
the target SSB is associated with a target TAG identifier, where the target TAG identifier is a TAG identifier corresponding to the target TRP.

In an embodiment, the target beam refers to a transmitting beam used by the UE to transmit the preamble for the target TRP with TAT/TAG failure. The target TAG identifier refers to a TAG identifier corresponding to the target TRP. The target SSB refers to an SSB associated with the target TAG identifier, and the association between the SSB and the TAG identifier may be implemented through network device pre-configuration.

In case that TATs corresponding to one or both of the two TRPs in uplink communication with the UE fail, the transmitting beam for transmitting the preamble for the failed TAT is the receiving beam of the target SSB.

For example, TAG identifiers are associated with SSB groups: TAG1 (corresponding to TRP1) is associated with {SSB1, SSB3, SSB5}, and TAG2 (corresponding to TRP2) is associated with {SSB2, SSB4, SSB6}. The base station configures the association between SSB group and TAG identifier to the terminal. In case that TAT1 fails, the terminal determines, when transmitting the preamble, the target SSB as SSB1, or SSB3 or SSB5, and uses the receiving beam of SSB1, or SSB3 or SSB5 associated with TAG1 corresponding to TAT1 to transmit.

For example, in case that TATs corresponding to both of the two TRPs in uplink communication with the UE fail, the UE may first initiate CBRA for one of the TRPs. At this time, the target beam for transmitting the preamble may be the receiving beam of the SSB associated with the TAG identifier, or the receiving beam of the SSB associated with the preamble. That is, the terminal determines the preamble based on the SSB and then uses the receiving beam of the SSB as the transmitting beam for transmitting the preamble. At the receiving end, the TRP receiving the SSB updates the TA of the corresponding TRP.

In the method for TA adjustment provided in the embodiments of the present application, the target SSB is determined through the association between the TAG identifier and the SSB, and the receiving beam of the target SSB is taken as the transmitting beam for transmitting the preamble to the target TRP, which determines the target beam, ensures the normal transmission of the preamble corresponding to the target TRP, aligns the transmitted preamble with the TRP corresponding to the failed TAT, and ensures the accuracy of TA estimation for the uplink corresponding to the failed TAT.

In some embodiments, in case that a preamble is determined for each target TRP, the target beam further includes one or more of the following beams:

a receiving beam of a target reference signal, where the target reference signal is a type D source reference signal included in target transmission configuration indication state information, and the target transmission configuration indication state information is associated with the target TAG identifier; or,

a receiving beam for downlink transmission scheduled by a physical downlink control channel (PDCCH) carried on a target control resource set, where the target control resource set is a control resource set indicated by a target control resource set pool index, and the target control resource set pool index is associated with the target TAG identifier.

In case that TATs corresponding to one or both of the two TRPs in uplink communication with the UE fail, the transmitting beam for transmitting the preamble for the failed TAT may be the receiving beam of the target reference signal.

The target reference signal is a type D source reference signal (RS) included in target transmission configuration indication state information (TCI state), and the target TCI state is a TCI state associated with the target TAG identifier.

For example, the UE performs uplink communication with TRP1 and TRP2, where TRP1 corresponds to TAG1/TAT1, and TRP2 corresponds to TAG2/TAT2. The base station configures TAG1 in {TCI state1, TCI state3, TCI state5} and TAG2 in {TCI state2, TCI state4, TCI state6}. In case that TAT1 fails, the UE determines TAG 1 corresponding to TAT 1 and determines TCI state3 associated with TAG1, using the receiving beam of type D source RS in TCI state3 as a beam for transmitting preamble 1 corresponding to the target TRP.

In case that TATs corresponding to one or both of the two TRPs in uplink communication with the UE fail, the transmitting beam for transmitting the preamble for the failed TAT may also be the receiving beam of the receiving beam for downlink transmission scheduled by the PDCCH carried on the target control resource set.

The target control resource set is a CORESET indicated by a CORESETPoolIndex, and the CORESETPoolIndex is associated with the target TAG identifier.

For example, the UE performs uplink communication with TRP1 and TRP2, where TRP1 corresponds to TAG1/TAT1 and TRP2 corresponds to TAG2/TAT2. The base station associates CORESETPoolIndex-1 with TAG1 and CORESETPoolIndex-2 with TAG2, where CORESETPoolIndex-1 indicates CORESET1 and CORESETPoolIndex-2 indicates CORESET2. In case that TAT1 fails, the UE determines TAG1 corresponding to TAT1 and determines the CORESETPoolIndex-1 associated with TAG1, determining CORESET1 indicated by CORESETPoolIndex-1. The terminal uses the receiving beam of the downlink transmission scheduled by the PDCCH carried on CORESET1 as the target beam for transmitting the preamble.

The following provides further explanation for the method for TA adjustment provided in the above embodiments through specific examples.

Example II

UE performs uplink transmission with two TRPs (TRP1 and TRP2), and a base station configures TAG1 and TAG2 for terminals in a same serving cell, where TAG1 and TAG2 correspond to a same component carrier (CC) of the serving cell as CC1, and TAG1 is used for UE to adjust TA for TRP1, and TAG2 is used for UE to adjust TA for TRP2. TAG1 includes TAT1, and TAG2 includes TAT2. Values of TAT1 and TAT2 are 1280 ms and infinity, respectively.

The association between the TCI state and the TAG identifier is configured by the base station as follows: TAG1 being configured in {TCI state1, TCI state3, TCI state5} and TAG2 being configured in {TCI state2, TCI state4, TCI state6}; or the association between the resource set pool index and the TAG identifier is configured as follows: CORESETPoolIndex-1 being associated with TAG1, and CORESETPoolIndex-2 being associated with TAG2.

The base station schedules the terminal for periodic PUSCH transmission through ConfiguredGrantConfig.

In an nth slot, in case that TAT1 fails, the terminal flushes HARQ buffer 1 corresponding to TAT1/TAG1, and clears PUSCH transmission corresponding to TAG1. The association between TAG and PUSCH may be implemented by configuring TAG ID in the spatial relation information.

The terminal clears the configured uplink grant corresponding to TAG1.

At an (n+3) slot, uplink data reaches and the terminal initiates CBRA for TRP1. The terminal selects preamble 1 for uplink transmission in the preamble group, and the relationship between preamble group and the TRP may be expressed as:

Group1/TRP1{preamble1, preamble3, preamble5}; and

Group2/TRP2 {preamble2, preamble4, preamble6}

The beam used by the terminal to transmit preamble 1 is the receiving beam of type D source RS in TCI state3 associated with TAG1, or the receiving beam of downlink transmission scheduled by the PDCCH carried on CORESET1 indicated by CORESETPoolIndex-1 associated with TAG1.

Preamble 1 is transmitted to the network device based on the determined beam for transmitting preamble 1. The network device feeds back an adjustment command to the terminal, such as the TAC carried in the RAR MAC PDU. The terminal determines the TA adjustment value corresponding to TRP1 where TAT1 fails based on the adjustment command, and determines the available TAT. Based on this TA adjustment value, the TA adjustment is made within the validity period indicated by the TAT.

In the method for TA adjustment provided in the embodiments of the present application, the SSB, TCI state information or CORESETPoolIndex is associated with the TAG identifier. The terminal determines the transmitting beam of the preamble based on this association as the receiving beam of the target SSB, the receiving beam of the type D source RS included in the target TCI state information, or the receiving beam of the downlink transmission scheduled by the PDCCH carried on CORESET1 indicated by the target CORESETPoolIndex, accurately determining the transmitting beam of the preamble, ensuring that the preamble is accurately transmitted for the target TRP, and ensuring the accuracy of TA estimation for the uplink corresponding to failed TAT.

In some embodiments, in case that two TRPs correspond to a same TAT, determining the TAT corresponding to the target TRP includes:

determining a time interval for receiving adjustment commands corresponding to two TRPs; and

resetting the TAT corresponding to the target TRP in case that the time interval is less than a given time window length.

In an embodiment, in case that the UE performs uplink communication with two TRPs, the two TRPs correspond to a same TAT. In case of updating TA in a closed loop, after the network device issues an adjustment command (TAC MAC CE) for one TRP thereof, the terminal does not immediately reset the TAT, but waits for the network device to issue an adjustment command for the other TRP. Then, the time interval between the two adjustment commands is calculated and compared with the given time window length. Only in case that the time interval is less than the given time window length, the terminal resets the TAT.

For example, the UE performs uplink transmission with TRP1 and TRP2. The base station configures TAG1 and TAG2 for UE in the same cell, corresponding to TRP1 and TRP2 respectively. TAG1 and TAG2 carry the same TAT such as TAT1. A time window length of m is given, in case of updating TA in a closed loop, the UE receives the adjustment command TAC1 corresponding to TAG1 in the nth slot, and then receives the adjustment command TAC2 corresponding to TAG2 in an (n+k) th slot. The terminal calculates the time interval between receiving TAC1 and TAC2 as k. If k<m, the terminal resets TAT1; if k>m, the terminal does not reset TAT1 and continues to wait for the next adjustment command until the time interval between the two TRP adjustment commands received is less than m before resetting TAT1.

In case that two TRPs correspond to a same TAT, a constraint is set to reset the TAT. Only when the time interval between receiving adjustment commands corresponding to the two TRPs is less than the given time window length, will the terminal reset the TAT, avoiding a problem that TA adjustment for one TRP and resetting the TAT may cause the other TRP to not have time to adjust the TA. This ensures that both TRPs may make corresponding TA adjustments and achieve uplink synchronization in case that they correspond to the same TAT.

In some embodiments, determining the TA adjustment value corresponding to the target TRP based on the adjustment command includes:

parsing a first numerical value and a TAG identifier from the adjustment command, where the TAG identifier is used to indicate the target TRP; and

determining the first numerical value as the TA adjustment value corresponding to the target TRP based on the TAG identifier.

In an embodiment, when the UE initially accesses, the network device issues the RAR MAC CE, which carries an initial adjustment command including the first numerical value and the TAG identifier. The UE receives and parses the adjustment command to obtain the first numerical value and the TAG identifier. The first numerical value is the initial TA adjustment value, which is an initial time offset. The TAG identifier is used to indicate the target TRP, and the first numerical value is determined to be the TA adjustment value corresponding to the target TRP based on the TAG identifier.

For example, the UE receives an adjustment command transmitted from the network device, and parses the adjustment command to obtain the first numerical value and the TAG identifier, such as TA1 and TAG1. Since TAG1 is configured by the network side for the UE and corresponds to the target TRP1, the UE determines that TA1 is the TA adjustment value corresponding to TRP1 based on TAG1 in the adjustment command.

By configuring the TAG identifier corresponding to the target TRP in the adjustment command during the initial access of the terminal, the terminal may find the corresponding TRP based on the TAG identifier, determine that the first numerical value in the adjustment command is used for TA adjustment of the corresponding TRP, and perform initial TA adjustment to ensure smooth subsequent closed-loop TA adjustment.

In some embodiments, determining the TA adjustment value corresponding to the target TRP based on the adjustment command includes:

parsing a first numerical value and a CORESETPoolIndex from the adjustment command, where the CORESETPoolIndex is used to indicate the target TRP; and

determining the first numerical value as the TA adjustment value corresponding to the target TRP based on the CORESETPoolIndex.

In an embodiment, when the UE initially accesses, the network device issues the RAR MAC CE, which carries an initial adjustment command including the first numerical value and the CORESETPoolIndex. The UE associates the first numerical value in the adjustment command with the TAG ID based on the association between the CORESETPoolIndex and the TAG ID, and then determines that the first numerical value is the TA adjustment value corresponding to the TRP indicated by the TAG identifier.

For example, the UE receives an adjustment command transmitted from the network device, and parses the adjustment command to obtain the first numerical value TA1 and CORESETPoolIndex-1. Since CORESETPoolIndex-1 corresponds to TAG1 in the pre-configured association with the TAG identifier, and TAG1 corresponds to the target TRP1, the UE determines that TA1 in the adjustment command is the TA adjustment value corresponding to TRP1.

By configuring CORESETPoolIndex in the adjustment command during the initial access of the terminal, the CORESETPoolIndex being associated with the TAG identifier corresponding to the target TRP, the terminal may find the corresponding TRP based on the TAG identifier corresponding to the CORESETPoolIndex, determine that the first numerical value in the adjustment command is used for TA adjustment of the corresponding TRP, and perform initial TA adjustment to ensure smooth subsequent closed-loop TA adjustment.

In some embodiments, determining the TA adjustment value corresponding to the target TRP based on the adjustment command includes:

parsing a first numerical value from the adjustment command, and determining a physical downlink control channel (PDCCH) corresponding to downlink control information (DCI) for scheduling the adjustment command, where the PDCCH is used to indicate the target TRP; and

determining the first numerical value as the TA adjustment value corresponding to the target TRP based on the PDCCH.

In an embodiment, when the UE initially accesses, the network device issues the RAR MAC CE, which carries an initial adjustment command including the first numerical value. The terminal determines the PDCCH corresponding to the DCI for scheduling the adjustment command, and determines that the first numerical value in the adjustment command is the TA adjustment value corresponding to the TRP indicated by the PDCCH.

For example, the UE receives an adjustment command transmitted from the network device, parses the adjustment command to obtain the first numerical value TA1, and then determines the PDCCH corresponding to the DCI that schedules the adjustment command, obtaining CORESETPoolIndex-1 corresponding to the PDCCH. Since CORESETPoolIndex-1 corresponds to TAG1 in the pre-configured association with the TAG identifier, and TAG1 corresponds to the target TRP1, the UE determines that TA1 in the adjustment command is the TA adjustment value corresponding to TRP1.

By determining the PDCCH corresponding to the DCI of the scheduling adjustment command and determining the CORESETPoolIndex corresponding to the PDCCH, and through the association between the CORESETPoolIndex and the TAG identifier corresponding to the target TRP, the terminal may find the corresponding TRP based on the TAG identifier corresponding to the CORESETPoolIndex, determine that the first numerical value in the adjustment command is used for TA adjustment of the corresponding TRP, and perform initial TA adjustment to ensure smooth subsequent closed-loop TA adjustment.

The following provides further explanation for the method for TA adjustment provided in the above embodiments through specific examples.

Example III

UE performs uplink transmission with two TRPs (TRP1 and TRP2), and a base station configures TAG1 and TAG2 for terminals in a same serving cell, where TAG1 and TAG2 correspond to a same component carrier (CC) of the serving cell as CC1, and TAG1 is used for UE to adjust TA for TRP1, and TAG2 is used for UE to adjust TA for TRP2.

The base station configures a preamble for the terminal and a random access channel occasion (RACH occasion, RO) for transmitting the preamble.

At the initial access, the terminal selects a preamble based on the configuration of the base station and transmits the preamble at the transmission time (RO) of the PRACH for uplink access. Afterwards, the terminal receives the adjustment command transmitted from the base station within an RAR time window (carried through the RAR MAC PDU).

The terminal parses the adjustment command and obtains a first numerical value of 38, and determines which TAG/TRP the first numerical value is used for in one of the following ways.

Way 1: the adjustment command includes a TAG ID, and the terminal parses the TAG ID in the adjustment command as TAG1, indicating terminal that the TA initial value corresponding to TAG1/TRP1 is 38.

Way 2: the adjustment command includes a CORESETPoolIndex, and the terminal parses the adjustment command to obtain CORESETPoolIndex-1. Through association between CORESETPoolIndex-1 and TAG1 corresponding to the target TRP, the TA initial value corresponding to TAG1/TRP1 is determined to be 38.

Way 3: the terminal determines the PDCCH corresponding to the DCI of the scheduling adjustment command and determines the CORESETPoolIndex corresponding to the PDCCH. Then, based on the association between the CORESETPoolIndex and TAG1 corresponding to the target TRP, the TA initial value corresponding to TAG1/TRP1 is determined to be 38.

In case of subsequent TA closed-loop updates on TAG1, the following formula is used to calculate the new TA adjustment value:

$$N_{TA\_new\_1} = N_{TA\_old\_1} + (TA1 - 31) \times 16 \times 64 \div 2^u,$$

where $TA1 = 0,1,2, ...,63$; where $N_{TA\_old\_1}$ is a TA adjustment value corresponding to TAG1 or TRP1 in a previous time, and the initial value is the first numerical value included in the adjustment command carried by the RAR MAC PDU when the UE initially accesses. TA1 is a TA value included in this adjustment command, $N_{TA\_new\_1}$ is a TA adjustment value calculated based on the previous TA adjustment value and the TA value included in this adjustment command for this TA adjustment, and u is a minimum uplink subcarrier spacing configured by the UE.

Example IV

UE performs uplink transmission with two TRPs (TRP1 and TRP2), and a base station configures TAG1 and TAG2 for terminals in a same serving cell, where TAG1 and TAG2 correspond to a same component carrier (CC) of the serving cell as CC1, and TAG1 is used for UE to adjust TA for TRP1, and TAG2 is used for UE to adjust TA for TRP2.

The base station configures a preamble for the terminal and a RACH RO for transmitting the preamble.

At the initial access, the terminal selects a preamble based on the configuration of the base station and transmits preamble 1 and preamble 2 at the transmission time (RO) of the PRACH. Afterwards, the terminal receives an adjustment command transmitted from the base station within the RAR window (carried through RAR MAC PDU). The terminal parses the adjustment command and obtains two first numerical values, namely 38 and 40, and determines which TAG/TRP the first numerical value is used for through one of the following ways.

Way 1: the adjustment command includes TAG ID, TAG1, and TAG2, which correspond to the first numerical values of 38 and 40 in the adjustment command, respectively. The terminal is indicated that the TA initial value corresponding to TAG1/TRP1 is 38, and the TA initial value corresponding to TAG2/TRP2 is 40.

Way 2: the adjustment command includes CORESETPoolIndex-1 and CORESETPoolIndex-2, which correspond to the first numerical values of 38 and 40 in the adjustment command, respectively. Through the association between CORESETPoolIndex-1 and TAG1 corresponding to the target TRP, as well as the association between CORESETPoolIndex-2 and TAG2 corresponding to the target TRP, it is determined that the initial TA value corresponding to TAG1/TRP1 is 38, and the initial TA value corresponding to TAG2/TRP2 is 40.

In case of subsequent TA closed-loop updates on TAG1 and TAG 2, the following formula is used to calculate the new TA adjustment value:

$$N_{TA\_new\_1} = N_{TA\_old\_1} + (TA1 - 31) \times 16 \times 64 \div 2^u,$$

$$N_{TA\_new\_2} = N_{TA\_old\_2} + (TA2 - 31) \times 16 \times 64 \div 2^u,$$

where $TA1 = 0,1,2, ...,63$ , $TA2 = 0,1,2, ... ,63$ . $N_{TA\_old\_2}$ is a TA adjustment value corresponding to TAG2 or TRP2 in the previous time, and its initial value is the first numerical value of 40 included in the adjustment command when the UE initially accesses; $N_{TA\_old\_1}$ is a TA adjustment value corresponding to TAG1 or TRP1 in the previous time, and its initial value is the first numerical value 38 included in the adjustment command when the UE initially accesses. TA1 and TA2 are the TA values included in this adjustment command. $N_{Ta\_new\_1}$ is a TA adjustment value for this TA adjustment, calculated based on $N_{TA\_old\_1}$ and the corresponding TA value included in this adjustment command, $N_{TA\_new\_2}$ is a TA adjustment value for this TA adjustment, calculated based on the corresponding TA value included in this adjustment command, and u is a minimum uplink subcarrier spacing configured by the UE.

In the method for TA adjustment provided in the embodiments of the present application, the TA adjustment value corresponding to the target TRP is determined based on the adjustment command transmitted from the network device, and the TA is adjusted based on the TA adjustment value within the validity period indicated by the TAT corresponding to the target TRP. The UE may adjust the TA when the TAT fails and causes uplink asynchronization in the scenario of MTRP, maintaining uplink synchronization in the MTRP scenario. By introducing two independent TATs corresponding to a TRP respectively, it is possible to avoid affecting the uplink transmission of one link in case that the TAT of the other link fails. In case that the TAT fails and causes uplink asynchronization, the preamble is selected and the beam that transmits the preamble is determined to align the transmitted preamble with the TRP corresponding to the failed TAT, ensuring the accuracy of TA estimation for the uplink corresponding to the failed TAT. A scheme for determining the TAG/TRP corresponding to the TA value obtained during the RACH process is also provided. The terminal may calculate the corresponding updated TA adjustment value during the subsequent TA closed-loop update.

FIG. 2 is a second schematic diagram of a method for TA adjustment according to an embodiment of the present application. As shown in FIG. 2, embodiments of the present application provide a method for TA adjustment, which may be performed by a network device, such as a base station. The method includes:

Step 201: transmitting an adjustment command to a terminal, where the adjustment command is used to instruct a terminal to perform TA adjustment on an uplink of a target transmitting receiving point (TRP).

In some embodiments, in case that each TRP in two TRPs corresponds to a TAT respectively, and failure of the TAT/a timing advance group (TAG) corresponding to the target TRP causes an uplink asynchronization, the method further includes:

receiving a preamble corresponding to the target TRP transmitted from the terminal.

In an embodiment, the method for TA adjustment provided in the embodiments of the present application may refer to the method for TA adjustment embodiment with the terminal as the performing subject, and may achieve the same technical effect. Therefore, the same parts and beneficial effects as the method embodiments in this embodiment are not described here.

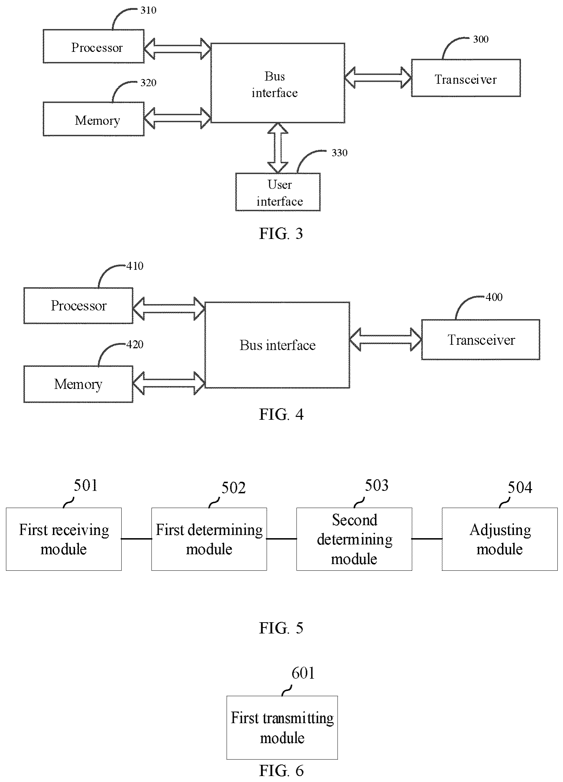

FIG. 3 is a schematic structural diagram of a terminal according to an embodiment of the present application. As shown in FIG. 3, the terminal includes a memory 320, a transceiver 300, and a processor 310, where

the memory 320 is used for storing a computer program, the transceiver 300 is used for receiving and transmitting data under control of the processor, and the processor 310 is used for reading the computer program in the memory and performing the following operations:

receiving an adjustment command transmitted from a network device, where the adjustment command is used to instruct a terminal to perform TA adjustment on an uplink of a target transmitting receiving point (TRP);

determining a TA adjustment value corresponding to the target TRP based on the adjustment command;

determining a time alignment timer (TAT) corresponding to the target TRP; and

performing TA adjustment based on the TA adjustment value and the TAT.

In an embodiment, the transceiver 300 is used for receiving and transmitting data under control of the processor 310.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, which are well known in the art, and therefore will not be further described in the present application. The bus interface provides an interface. The transceiver 300 may include multiple elements, i.e., a transmitter and a receiver, units for providing communication with various other devices over transmission media including wireless channels, wired channels, fiber optic cables, and the like. For different user equipment, a user interface 330 may be an interface capable of externally or internally connecting the required device, and the connected device includes, but not limited to, a keypad, a display, a speaker, a microphone, a joystick, and the like.

The processor 310 is responsible for managing the bus architecture and general processing, and the memory 320 may store data used by the processor 310 when performing operations.

In some embodiments, the processor 310 may be a central processing unit (CPU), an application specific integrated circuit (ASIC), a field-programmable gate array (FPGA), or a complex programmable logic device (CPLD). The processor may also use a multi-core architecture.

The processor is configured to perform any of the methods of the embodiments of the present application based on an obtained executable instruction by calling the computer program stored in the memory. The processor and memory may also be physically separated.

In some embodiments, in case that each TRP in two TRPs corresponds to a TAT respectively, and failure of the TAT/a timing advance group (TAG) corresponding to the target TRP causes an uplink asynchronization, the processor is further used for reading the computer program in the memory and performing the following operations:
initiating a random access process for the target TRP.

In some embodiments, initiating the random access process for the target TRP includes:

determining a preamble corresponding to the target TRP;

determining a target beam for transmitting the preamble; and

transmitting the preamble to the network device based on the target beam.

In some embodiments, the processor is further used for reading the computer program from the memory and performing one or more of the following operations:

clearing a hybrid automatic repeat request (HARQ) cache corresponding to a failed TAT/TAG;

clearing a hybrid automatic repeat request (HARQ) process corresponding to a failed TAT/TAG;

clearing a sounding reference signal (PUSCH) transmission corresponding to a failed TAT/TAG;

clearing a sounding reference signal (PUCCH) transmission corresponding to a failed TAT/TAG;

clearing a sounding reference signal (SRS) transmission corresponding to a failed TAT/TAG;

releasing a physical uplink control channel (PUCCH) resource corresponding to a failed TAT/TAG;

releasing a physical uplink control channel (SRS) resource corresponding to a failed TAT/TAG;

clearing a configured downlink assignment corresponding to a failed TAT/TAG;

clearing a configured uplink grant corresponding to a failed TAT/TAG; or,

clearing a physical uplink shared channel (PUSCH) resource for semi-persistent channel state information (CSI) reporting corresponding to a failed TAT/TAG.

In some embodiments, determining the preamble corresponding to the target TRP includes:

determining a selection range of the preamble based on a synchronization signal block (SSB) or a TAG identifier; and

determining the preamble corresponding to the target TRP based on the selection range.

In some embodiments, determining the selection range of the preamble based on the TAG identifier includes:

determining a TAG identifier corresponding to the target TRP;

determining a preamble group based on the TAG identifier, where the preamble group is associated with the TAG identifier; and

determining the selection range of the preamble, where the selection range of the preamble includes the preamble group.

In some embodiments, the target beam is a receiving beam of a target SSB; and
the target SSB is associated with a target TAG identifier, where the target TAG identifier is a TAG identifier corresponding to the target TRP.

In some embodiments, in case that a preamble is determined for each target TRP, the target beam further includes one or more of the following beams:

a receiving beam of a target reference signal, where the target reference signal is a type D source reference signal included in target transmission configuration indication state information, and the target transmission configuration indication state information is associated with the target TAG identifier; or,

a receiving beam for downlink transmission scheduled by a physical downlink control channel (PDCCH) carried on a target control resource set, where the target control resource set is a control resource set indicated by a target control resource set pool index, and the target control resource set pool index is associated with the target TAG identifier.

In some embodiments, in case that two TRPs correspond to a same TAT, determining the TAT corresponding to the target TRP includes:

determining a time interval for receiving adjustment commands corresponding to two TRPs; and

resetting the TAT corresponding to the target TRP in case that the time interval is less than a given time window length.

In some embodiments, determining the TA adjustment value corresponding to the target TRP based on the adjustment command includes:

parsing a first numerical value and a TAG identifier from the adjustment command, where the TAG identifier is used to indicate the target TRP; and

determining the first numerical value as the TA adjustment value corresponding to the target TRP based on the TAG identifier.

In some embodiments, determining the TA adjustment value corresponding to the target TRP based on the adjustment command includes:

parsing a first numerical value and a CORESETPoolIndex from the adjustment command, where the CORESETPoolIndex is used to indicate the target TRP; and

determining the first numerical value as the TA adjustment value corresponding to the target TRP based on the CORESETPoolIndex.

In some embodiments, determining the TA adjustment value corresponding to the target TRP based on the adjustment command includes:

parsing a first numerical value from the adjustment command, and determining a physical downlink control channel (PDCCH) corresponding to downlink control information (DCI) for scheduling the adjustment command, where the PDCCH is used to indicate the target TRP; and

determining the first numerical value as the TA adjustment value corresponding to the target TRP based on the PDCCH.

It should be noted that the terminal provided in the embodiments of the present application may implement all the method steps implemented by the method embodiment with the terminal as the performing subject, and may achieve the same technical effect. Therefore, the same parts and beneficial effects as the method embodiments in this embodiment are not described here.

FIG. 4 is a schematic structural diagram of a network device according to an embodiment of the present application. As shown in FIG. 4, the network device includes a memory 420, a transceiver 400, and a processor 410, where the memory 420 is used for storing a computer program, the transceiver 400 is used for receiving and transmitting data under control of the processor, and the processor 410 is used for reading the computer program in the memory and performing the following operations:

transmitting an adjustment command to a terminal, where the adjustment command is used to instruct a terminal to perform TA adjustment on an uplink of a target transmitting receiving point (TRP).

In an embodiment, the transceiver 400 is used for receiving and transmitting data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, which are well known in the art, and therefore will not be further described in the present application. The bus interface provides an interface. The transceiver 400 may include multiple elements, i.e., a transmitter and a receiver, units for providing communication with various other devices over transmission media including wireless channels, wired channels, fiber optic cables, and the like. The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD). The processor may also use a multi-core architecture.

In some embodiments, in case that each TRP in two TRPs corresponds to a TAT respectively, and failure of the TAT/a timing advance group (TAG) corresponding to the target TRP causes an uplink asynchronization, the processor is further used for reading the computer program in the memory and performing the following operations:
receiving a preamble corresponding to the target TRP transmitted from the terminal.

It should be noted that the network device provided in the embodiments of the present application may implement all the method steps implemented by the method embodiment with the network device as the performing subject, and may achieve the same technical effect. Therefore, the same parts and beneficial effects as the method embodiments in this embodiment are not described here.

FIG. 5 is a first schematic structural diagram of an apparatus for TA adjustment according to an embodiment of the present application. As shown in FIG. 5, embodiments of the present application provide an apparatus for timing advance (TA) adjustment, which includes a first receiving module 501, a first determining module 502, a second determining module 503, and an adjusting module 504, where
the first receiving module 501 is used for receiving an adjustment command transmitted from a network device, where the adjustment command is used to instruct a terminal to perform TA adjustment on an uplink of a target transmitting receiving point (TRP); the first determining module 502 is used for determining a TA adjustment value corresponding to the target TRP based on the adjustment command; the second determining module 503 is used for determining a time alignment timer (TAT) corresponding to the target TRP; and the adjusting module 504 is used for performing TA adjustment based on the TA adjustment value and the TAT.

In some embodiments, the apparatus further includes an initiating module, where the initiating module is used for initiating a random access process for the target TRP.

In some embodiments, the initiating module includes:

a first determining submodule, used for determining a preamble corresponding to the target TRP;

a second determining submodule, used for determining a target beam for transmitting the preamble; and

a transmitting submodule, used for transmitting the preamble to the network device based on the target beam.

In some embodiments, the initiating module further includes:

a first clearing submodule, used for clearing a hybrid automatic repeat request (HARQ) cache corresponding to a failed TAT/TAG;

a second clearing submodule, used for clearing a hybrid automatic repeat request (HARQ) process corresponding to a failed TAT/TAG;

a third clearing submodule, used for clearing a physical uplink shared channel (PUSCH) transmission corresponding to a failed TAT/TAG;

a fourth clearing submodule, used for clearing a physical uplink control channel (PUCCH) transmission corresponding to a failed TAT/TAG;

a fifth clearing submodule, used for clearing a sounding reference signal (SRS) transmission corresponding to a failed TAT/TAG;

a first releasing submodule, used for releasing a physical uplink control channel (PUCCH) resource corresponding to a failed TAT/TAG;

a second releasing submodule, used for releasing a sounding reference signal (SRS) resource corresponding to a failed TAT/TAG;

a sixth clearing submodule, used for clearing a configured downlink assignment corresponding to a failed TAT/TAG;

a seventh clearing submodule, used for clearing a configured uplink grant corresponding to a failed TAT/TAG; or

an eighth clearing submodule, used for clearing a physical uplink shared channel (PUSCH) resource for semi-persistent channel state information (CSI) reporting corresponding to a failed TAT/TAG.

In some embodiments, the first determining submodule includes:

a first determining unit, used for determining a selection range of the preamble based on a synchronization signal block (SSB) or a TAG identifier; and

a second determining unit, used for determining the preamble corresponding to the target TRP based on the selection range.

In some embodiments, the first determining unit includes:

a first determining subunit, used for determining a TAG identifier corresponding to the target TRP;

a second determining subunit, used for determining a preamble group based on the TAG identifier, where the preamble group is associated with the TAG identifier; and

a third determining subunit, used for determining the selection range of the preamble, where the selection range of the preamble includes the preamble group.

In some embodiments, the target beam is a receiving beam of a target SSB; and
the target SSB is associated with a target TAG identifier, where the target TAG identifier is a TAG identifier corresponding to the target TRP.
In some embodiments, in case that a preamble is determined for each target TRP, the target beam further includes one or more of the following beams:

a receiving beam of a target reference signal, where the target reference signal is a type D source reference signal included in target transmission configuration indication state information, and the target transmission configuration indication state information is associated with the target TAG identifier; or,

a receiving beam for downlink transmission scheduled by a physical downlink control channel (PDCCH) carried on a target control resource set, where the target control resource set is a control resource set indicated by a target control resource set pool index, and the target control resource set pool index is associated with the target TAG identifier.

In some embodiments, the second determining module includes:

a third determining submodule, used for determining a time interval for receiving adjustment commands corresponding to two TRPs; and

a receiving submodule, used for resetting the TAT corresponding to the target TRP in case that the time interval is less than a given time window length.

In some embodiments, the first determining module includes:

a first parsing submodule, used for parsing a first numerical value and a TAG identifier from the adjustment command, where the TAG identifier is used to indicate the target TRP; and

a fourth determining submodule, used for determining the first numerical value as the TA adjustment value corresponding to the target TRP based on the TAG identifier.

In some embodiments, the first determining module further includes:

a second parsing submodule, used for parsing a first numerical value and a CORESETPoolIndex from the adjustment command, where the CORESETPoolIndex is used to indicate the target TRP; and

a fifth determining submodule, used for determining the first numerical value as the TA adjustment value corresponding to the target TRP based on the CORESETPoolIndex.

In some embodiments, the first determining module further includes:

a third parsing submodule, used for parsing a first numerical value from the adjustment command, and determining a physical downlink control channel (PDCCH) corresponding to downlink control information (DCI) for scheduling the adjustment command, where the PDCCH is used to indicate the target TRP; and

a sixth determining submodule, used for determining the first numerical value as the TA adjustment value corresponding to the target TRP based on the PDCCH.

In an embodiment, the apparatus for TA adjustment provided in the embodiments of the present application may achieve all method steps implemented by the method embodiment with the terminal as the performing subject, and may achieve the same technical effect. Therefore, the same parts and beneficial effects as the method embodiments in this embodiment are not described here.

FIG. 6 is a second schematic structural diagram of an apparatus for TA adjustment according to an embodiment of the present application. As shown in FIG. 6, embodiments of the present application provide an apparatus for timing advance (TA) adjustment, including a first transmitting module 601, where the first transmitting module 601 is used for transmitting an adjustment command to a terminal, where the adjustment command is used to instruct a terminal to perform TA adjustment on an uplink of a target transmitting receiving point (TRP).

In some embodiments, the apparatus further includes a second receiving module, where the second receiving module is used for receiving a preamble corresponding to the target TRP transmitted from the terminal.

In an embodiment, the apparatus for TA adjustment provided in the embodiments of the present application may achieve all method steps implemented by the method embodiment with the network device as the performing subject, and may achieve the same technical effect. Therefore, the same parts and beneficial effects as the method embodiments in this embodiment are not described here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

In some embodiments, a computer-readable storage medium is further provided, where the computer-readable storage medium stores a computer program for causing a computer to perform the methods for TA adjustment provided by the above method embodiments.

In an embodiment, the computer-readable storage medium provided in the embodiments of the present application may implement all the method steps implemented in the above method embodiments and achieve the same technical effects. Therefore, the same parts and beneficial effects as the method embodiments in this embodiment are not described here.

It should be noted that the computer-readable storage medium may be any available medium or data storage device that may be accessed by the computer, including but not limited to, a magnetic storage (e.g., a floppy disk, a hard disk, a magnetic tape, a magnetooptical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Additionally, it should be noted that the terms "first", "second", etc. in the embodiments of the present application are used to distinguish similar objects and are not used to describe a specific order or sequence. It should be understood that the terms used in this way may be interchanged in appropriate circumstances, so that the embodiments of the present application may be implemented in order other than those illustrated or described herein, and the objects distinguished by "first" and "second" are usually of the same class, without limiting the number of objects, for example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

The phrase "determining B based on A" in the present application means that the factor A should be considered when determining B. Not limited to "determining B based solely on A", it should also include "determining B based on A and C", "determining B based on A, C, and E", "determining C based on A, and further determine B based on C" etc. In addition, it may also include using A as a condition for determining B, for example, "when A satisfies a first condition, using a first method to determine B"; for another example, "in case that A satisfies a second condition, determining B" and so on; for yet another example, "in case that A satisfies a third condition, determining B based on a first parameter" and so on. A may also be used as a condition for determining B, such as "in case that A satisfies the first condition, using the first method to determine C, and further determining B based on C", etc.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission, etc.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer usable storage media (including but not limited to disk storage and optical storage) containing computer usable program code.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

**Claims**

1. A method for timing advance (TA) adjustment, performed by a terminal, comprising:

   receiving an adjustment command transmitted from a network device, wherein the adjustment command is used to instruct a terminal to perform TA adjustment on an uplink of a target transmitting receiving point (TRP);
   determining a TA adjustment value corresponding to the target TRP based on the adjustment command;
   determining a time alignment timer (TAT) corresponding to the target TRP; and
   performing TA adjustment based on the TA adjustment value and the TAT.

2. The method of claim 1, wherein in case that each TRP in two TRPs corresponds to a TAT respectively, and failure of the TAT/a timing advance group (TAG) corresponding to the target TRP causes an uplink asynchronization, the method further comprises:
   initiating a random access process for the target TRP.

3. The method of claim 2, wherein initiating the random access process for the target TRP comprises:

   determining a preamble corresponding to the target TRP;
   determining a target beam for transmitting the preamble; and
   transmitting the preamble to the network device based on the target beam.

4. The method of claim 3, wherein the method further comprises one or more of the following steps:

   clearing a physical uplink shared channel (PUSCH) transmission corresponding to a failed TAT/TAG;
   clearing a configured downlink assignment corresponding to a failed TAT/TAG;
   clearing a configured uplink grant corresponding to a failed TAT/TAG; or,

clearing a physical uplink shared channel (PUSCH) resource for semi-persistent channel state information (CSI) reporting corresponding to a failed TAT/TAG.

5. The method of claim 3, wherein determining the preamble corresponding to the target TRP comprises:

determining a selection range of the preamble based on a synchronization signal block (SSB) or a TAG identifier; and
determining the preamble corresponding to the target TRP based on the selection range.

6. The method of claim 5, wherein determining the selection range of the preamble based on the TAG identifier comprises:

determining a TAG identifier corresponding to the target TRP;
determining a preamble group based on the TAG identifier, wherein the preamble group is associated with the TAG identifier; and
determining the selection range of the preamble, wherein the selection range of the preamble comprises the preamble group.

7. The method of claim 3, wherein the target beam is a receiving beam of a target SSB; and the target SSB is associated with a target TAG identifier, wherein the target TAG identifier is a TAG identifier corresponding to the target TRP.

8. The method of claim 7, wherein in case that a preamble is determined for each target TRP, the target beam further comprises one or more of the following beams:

a receiving beam of a target reference signal, wherein the target reference signal is a type D source reference signal comprised in target transmission configuration indication state information, and the target transmission configuration indication state information is associated with the target TAG identifier; or,
a receiving beam for downlink transmission scheduled by a physical downlink control channel (PDCCH) carried on a target control resource set, wherein the target control resource set is a control resource set indicated by a target control resource set pool index, and the target control resource set pool index is associated with the target TAG identifier.

9. The method of claim 1, wherein in case that two TRPs correspond to a same TAT, determining the TAT corresponding to the target TRP comprises:

determining a time interval for receiving adjustment commands corresponding to two TRPs; and
resetting the TAT corresponding to the target TRP in case that the time interval is less than a given time window length.

10. The method of claim 1, wherein determining the TA adjustment value corresponding to the target TRP based on the adjustment command comprises:

parsing a first numerical value and a TAG identifier from the adjustment command, wherein the TAG identifier is used to indicate the target TRP; and
determining the first numerical value as the TA adjustment value corresponding to the target TRP based on the TAG identifier.

11. The method of claim 1, wherein determining the TA adjustment value corresponding to the target TRP based on the adjustment command comprises:

parsing a first numerical value and a CORESETPoolIndex from the adjustment command, wherein the CORESETPoolIndex is used to indicate the target TRP; and
determining the first numerical value as the TA adjustment value corresponding to the target TRP based on the CORESETPoolIndex.

12. The method of claim 1, wherein determining the TA adjustment value corresponding to the target TRP based on the adjustment command comprises:

parsing a first numerical value from the adjustment command, and determining a physical downlink control channel (PDCCH) corresponding to downlink control information (DCI) for scheduling the adjustment command, wherein the PDCCH is used to indicate the target TRP; and
determining the first numerical value as the TA adjustment value corresponding to the target TRP based on the PDCCH.

13. A method for timing advance (TA) adjustment, performed by a network device, comprising:
transmitting an adjustment command to a terminal, wherein the adjustment command is used to instruct the terminal to perform TA adjustment on an uplink of a target transmitting receiving point (TRP).

14. The method of claim 13, wherein in case that each TRP in two TRPs corresponds to a TAT respectively, and failure of the TAT/a timing advance group (TAG) corresponding to the target TRP causes an uplink asynchronization, the method further comprises:
receiving a preamble corresponding to the target TRP transmitted from the terminal.

15. A terminal, comprising a memory, a transceiver, and a processor, wherein
the memory is used for storing a computer program; the transceiver is used for transmitting and receiving data under control of the processor; and the processor is used for reading the computer program in the memory and performing the following operations:

receiving an adjustment command transmitted from a network device, wherein the adjustment command is used to instruct a terminal to perform TA adjustment on an uplink of a target transmitting receiving point (TRP);
determining a TA adjustment value corresponding to the target TRP based on the adjustment command;
determining a time alignment timer (TAT) corresponding to the target TRP; and
performing TA adjustment based on the TA adjustment value and the TAT.

16. The terminal of claim 15, wherein in case that each TRP in two TRPs corresponds to a TAT respectively, and failure of the TAT/a timing advance group (TAG) corresponding to the target TRP causes an uplink asynchronization, the processor is further used for reading the computer program in the memory and performing the following operations:
initiating a random access process for the target TRP.

17. The terminal of claim 16, wherein initiating the random access process for the target TRP comprises:

determining a preamble corresponding to the target TRP;
determining a target beam for transmitting the preamble; and
transmitting the preamble to the network device based on the target beam.

18. The terminal of claim 17, wherein the processor is further used for reading the computer program in the memory and perform one or more of the following operations:

clearing a sounding reference signal (PUSCH) transmission corresponding to a failed TAT/TAG;
clearing a configured downlink assignment corresponding to a failed TAT/TAG;
clearing a configured uplink grant corresponding to a failed TAT/TAG; or,
clearing a physical uplink shared channel (PUSCH) resource for semi-persistent channel state information (CSI) reporting corresponding to a failed TAT/TAG.

19. The terminal of claim 17, wherein determining the preamble corresponding to the target TRP comprises:

determining a selection range of the preamble based on a synchronization signal block (SSB) or a TAG identifier; and
determining the preamble corresponding to the target TRP based on the selection range.

20. The terminal of claim 19, wherein determining the selection range of the preamble based on the TAG identifier comprises:

determining a TAG identifier corresponding to the target TRP;
determining a preamble group based on the TAG identifier, wherein the preamble group is associated with the TAG identifier; and

determining the selection range of the preamble, wherein the selection range of the preamble comprises the preamble group.

21. The terminal of claim 17, wherein the target beam is a receiving beam of a target SSB; and the target SSB is associated with a target TAG identifier, wherein the target TAG identifier is a TAG identifier corresponding to the target TRP.

22. The terminal of claim 21, wherein in case that a preamble is determined for each target TRP, the target beam further comprises one or more of the following beams:

a receiving beam of a target reference signal, wherein the target reference signal is a type D source reference signal comprised in target transmission configuration indication state information, and the target transmission configuration indication state information is associated with the target TAG identifier; or, a receiving beam for downlink transmission scheduled by a physical downlink control channel (PDCCH) carried on a target control resource set, wherein the target control resource set is a control resource set indicated by a target control resource set pool index, and the target control resource set pool index is associated with the target TAG identifier.

23. The terminal of claim 15, wherein in case that two TRPs correspond to a same TAT, determining the TAT corresponding to the target TRP comprises:

determining a time interval for receiving adjustment commands corresponding to two TRPs; and resetting the TAT corresponding to the target TRP in case that the time interval is less than a given time window length.

24. The terminal of claim 15, wherein determining the TA adjustment value corresponding to the target TRP based on the adjustment command comprises:

parsing a first numerical value and a TAG identifier from the adjustment command, wherein the TAG identifier is used to indicate the target TRP; and determining the first numerical value as the TA adjustment value corresponding to the target TRP based on the TAG identifier.

25. The terminal of claim 15, wherein determining the TA adjustment value corresponding to the target TRP based on the adjustment command comprises:

parsing a first numerical value and a CORESETPoolIndex from the adjustment command, wherein the CORESETPoolIndex is used to indicate the target TRP; and determining the first numerical value as the TA adjustment value corresponding to the target TRP based on the CORESETPoolIndex.

26. The terminal of claim 15, wherein determining the TA adjustment value corresponding to the target TRP based on the adjustment command comprises:

parsing a first numerical value from the adjustment command, and determining a physical downlink control channel (PDCCH) corresponding to downlink control information (DCI) for scheduling the adjustment command, wherein the PDCCH is used to indicate the target TRP; and determining the first numerical value as the TA adjustment value corresponding to the target TRP based on the PDCCH.

27. A network device, comprising a memory, a transceiver, and a processor, wherein the memory is used for storing a computer program; the transceiver is used for transmitting and receiving data under control of the processor; and the processor is used for reading the computer program in the memory and performing the following operations: transmitting an adjustment command to a terminal, wherein the adjustment command is used to instruct the terminal to perform TA adjustment on an uplink of a target transmitting receiving point (TRP).

28. The network device of claim 27, wherein in case that each TRP in two TRPs corresponds to a TAT respectively, and failure of the TAT/a timing advance group (TAG) corresponding to the target TRP causes an uplink asynchronization, the processor is further used for reading the computer program in the memory and performing the following operations:

receiving a preamble corresponding to the target TRP transmitted from the terminal.

29. An apparatus for timing advance (TA) adjustment, comprising:

a first receiving module, used for receiving an adjustment command transmitted from a network device, wherein the adjustment command is used to instruct a terminal to perform TA adjustment on an uplink of a target transmitting receiving point (TRP);
a first determining module, used for determining a TA adjustment value corresponding to the target TRP based on the adjustment command;
a second determining module, used for determining a time alignment timer (TAT) corresponding to the target TRP; and
an adjusting module, used for performing TA adjustment based on the TA adjustment value and the TAT.

30. The apparatus of claim 29, further comprising an initiating module, wherein
the initiating module is used for initiating a random access process for the target TRP.

31. The apparatus of claim 30, wherein the initiating module comprises:

a first determining submodule, used for determining a preamble corresponding to the target TRP;
a second determining submodule, used for determining a target beam for transmitting the preamble; and
a transmitting submodule, used for transmitting the preamble to the network device based on the target beam.

32. The apparatus of claim 31, wherein the initiating module further comprises:

a third clearing submodule, used for clearing a physical uplink shared channel (PUSCH) transmission corresponding to a failed TAT/TAG;
a sixth clearing submodule, used for clearing a configured downlink assignment corresponding to a failed TAT/TAG;
a seventh clearing submodule, used for clearing a configured uplink grant corresponding to a failed TAT/TAG; or,
an eighth clearing submodule, used for clearing a physical uplink shared channel (PUSCH) resource for semi-persistent channel state information (CSI) reporting corresponding to a failed TAT/TAG.

33. The apparatus of claim 31, wherein the first determining submodule comprises:

a first determining unit, used for determining a selection range of the preamble based on a synchronization signal block (SSB) or a TAG identifier; and
a second determining unit, used for determining the preamble corresponding to the target TRP based on the selection range.

34. The apparatus of claim 33, wherein the first determining unit comprises:

a first determining subunit, used for determining a TAG identifier corresponding to the target TRP;
a second determining subunit, used for determining a preamble group based on the TAG identifier, wherein the preamble group is associated with the TAG identifier; and
a third determining subunit, used for determining the selection range of the preamble, wherein the selection range of the preamble comprises the preamble group.

35. The apparatus of claim 31, wherein the target beam is a receiving beam of a target SSB; and
the target SSB is associated with a target TAG identifier, wherein the target TAG identifier is a TAG identifier corresponding to the target TRP.

36. The apparatus of claim 35, wherein in case that a preamble is determined for each target TRP, the target beam further comprises one or more of the following beams:

a receiving beam of a target reference signal, wherein the target reference signal is a type D source reference signal comprised in target transmission configuration indication state information, and the target transmission configuration indication state information is associated with the target TAG identifier; or,

a receiving beam for downlink transmission scheduled by a physical downlink control channel (PDCCH) carried on a target control resource set, wherein the target control resource set is a control resource set indicated by a target control resource set pool index, and the target control resource set pool index is associated with the target TAG identifier.

37. The apparatus of claim 29, wherein the second determining module comprises:

a third determining submodule, used for determining a time interval for receiving adjustment commands corresponding to two TRPs; and

a receiving submodule, used for resetting the TAT corresponding to the target TRP in case that the time interval is less than a given time window length.

38. The apparatus of claim 29, wherein the first determining module comprises:

a first parsing submodule, used for parsing a first numerical value and a TAG identifier from the adjustment command, wherein the TAG identifier is used to indicate the target TRP; and

a fourth determining submodule, used for determining the first numerical value as the TA adjustment value corresponding to the target TRP based on the TAG identifier.

39. The apparatus of claim 29, wherein the first determining module further comprises:

a second parsing submodule, used for parsing a first numerical value and a CORESETPoolIndex from the adjustment command, wherein the CORESETPoolIndex is used to indicate the target TRP; and

a fifth determining submodule, used for determining the first numerical value as the TA adjustment value corresponding to the target TRP based on the CORESETPoolIndex.

40. The apparatus of claim 29, wherein the first determining module further comprises:

a third parsing submodule, used for parsing a first numerical value from the adjustment command, and determining a physical downlink control channel (PDCCH) corresponding to downlink control information (DCI) for scheduling the adjustment command, wherein the PDCCH is used to indicate the target TRP; and

a sixth determining submodule, used for determining the first numerical value as the TA adjustment value corresponding to the target TRP based on the PDCCH.

41. An apparatus for timing advance (TA) adjustment, comprising:
a first transmitting module, used for transmitting an adjustment command to a terminal, wherein the adjustment command is used to instruct the terminal to perform TA adjustment on an uplink of a target transmitting receiving point (TRP).

42. The apparatus of claim 41, further comprising a second receiving module, wherein
the second receiving module is used for receiving a preamble corresponding to the target TRP transmitted from the terminal.

43. A computer-readable storage medium, wherein the computer-readable storage medium stores a computer program, and the computer program is used to cause a computer to perform the method for TA adjustment of any of claims 1 to 14.

Receiving an adjustment command transmitted from a network device, where the adjustment command is used to instruct a terminal to perform TA adjustment on an uplink of a target TRP — 101

Determining a TA adjustment value corresponding to the target TRP based on the adjustment command — 102

Determining a TAT corresponding to the target TRP — 103

Performing TA adjustment based on the TA adjustment value and the TAT — 104

FIG. 1

START

Transmitting an adjustment command to a terminal, where the adjustment command is used to instruct a terminal to perform TA adjustment on an uplink of a target TRP — 201

FIG. 2

310

Processor

320

Memory

Bus
interface

300

Transceiver

330

User
interface

FIG. 3

410

Processor

420

Memory

Bus interface

400

Transceiver

FIG. 4

501

First receiving
module

502

First determining
module

503

Second
determining
module

504

Adjusting
module

FIG. 5

601

First transmitting
module

FIG. 6

## INTERNATIONAL SEARCH REPORT

| International application No. |
| --- |
| **PCT/CN2024/070103** |

| A. | CLASSIFICATION OF SUBJECT MATTER |
| --- | --- |
| | H04W 74/08(2024.01)i |

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: TA, TAG, TAT, TP, TRP, 同步, 到期, 调整, 失效, 无效, 失 4w 步, 定时器, 随机接入, synchroniz+, expiry, adjust+, fail+, ineffective, invalid, timer, random access+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107105496 A (CHINA ACADEMY OF TELECOMMUNICATIONS TECHNOLOGY) 29 August 2017 (2017-08-29) description, paragraphs 91-177 | 13, 27, 41, 43 |
| Y | CN 107105496 A (CHINA ACADEMY OF TELECOMMUNICATIONS TECHNOLOGY) 29 August 2017 (2017-08-29) description, paragraphs 91-177 | 1-12, 14-26, 28-40, 42 |
| Y | US 2022353924 A1 (GUANGDONG OPPO MOBILE TELECOMMUNICATIONS CORP., LTD.) 03 November 2022 (2022-11-03) description, paragraphs 93-176 | 1-12, 14-26, 28-40, 42 |
| A | WO 2022155170 A1 (IDAC HOLDINGS, INC.) 21 July 2022 (2022-07-21) entire document | 1-43 |
| A | HUAWEI et al. "RAN2 aspects of UL beam management" *3GPP TSG-RAN WG2#99 R2-1708694*, 25 August 2017 (2017-08-25), entire document | 1-43 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 March 2024** | **03 April 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070103**

| Patent document cited in search report | | | Publication date (day/month/year) | Patent family member(s) | | | Publication date (day/month/year) |
|---|---|---|---|---|---|---|---|
| CN | 107105496 | A | 29 August 2017 | WO | 2017140195 | A1 | 24 August 2017 |
| US | 2022353924 | A1 | 03 November 2022 | EP | 4093102 | A1 | 23 November 2022 |
| | | | | WO | 2021146866 | A1 | 29 July 2021 |
| | | | | CN | 114982306 | A | 30 August 2022 |
| WO | 2022155170 | A1 | 21 July 2022 | EP | 4278735 | A1 | 22 November 2023 |
| | | | | KR | 20230131297 | A | 12 September 2023 |
| | | | | IL | 304303 | A | 01 September 2023 |
| | | | | BR | 112023013842 | A2 | 03 October 2023 |
| | | | | TW | 202234914 | A | 01 September 2022 |
| | | | | CN | 116918398 | A | 20 October 2023 |
| | | | | VN | 98671 | A | 25 October 2023 |
| | | | | IN | 202317045954 | A | 24 November 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310118532